# EUROPÄISCHE PATENTANMELDUNG

(11) **EP 3 466 249 A1**
(43) Veröffentlichungstag der Anmeldung: **10.04.2019**
(21) Anmeldenummer: 18198869.2
(22) Anmeldetag: 05.10.2018
(51) Int. Cl.: A01G 9/02, A01G 22/30

(54) **MOOS UMFASSENDES BEGRÜNUNGSSYSTEM**

(30) Priorität: 06.10.2017 DE 102017217781
(71) Anmelder: Freund GmbH, 14167 Berlin (DE)
(72) Erfinder: Freund, Josef, 14052 Berlin (DE)
(74) Vertreter: Maikowski & Ninnemann Patentanwälte Partnerschaft mbB

(57) **Zusammenfassung**

Die vorliegende Erfindung betrifft ein mit Moos umfassendes Begrünungssystem zum Aufstellen auf einer horizontalen Bodenfläche umfassend mindestens ein statisch tragenden Element (10, 20, 30) mit einer Vertikalen (h, h_{P}, h_{K}); mindestens eine Trägerplatte (12, 22, 32), wobei die mindestens eine Trägerplatte (12, 22, 32) an dem mindestens einem statisch tragenden Element (10, 20, 30) angeordnet ist; mindestens eine Moosmatte (13, 23, 33), wobei die mindestens eine mit der Moosmatte (13, 23, 33) versehene Trägerplatte (12, 22, 32) an dem mindestens einem statisch tragenden Element (10, 20, 30) derart angeordnet ist, so dass der sich zwischen der Trägerplatte und der Vertikalen des statisch tragenden Elementes bildende Winkel β zwischen 5° und 40°, bevorzugt zwischen 10° und 30°, insbesondere bevorzugt zwischen 15° und 25° beträgt.

## Beschreibung

Die Luftverschmutzung und Luftbelastung, insbesondere in Stadtzentren mit hohem Verkehrsaufkommen und hoher Bebauungsdichte, durch Feinstaub und Stickoxiden ist ein gravierendes Problem. Verschiedene Ansätze zur Lösung dieses Problems, wie zum Beispiel Reduzierung der Geschwindigkeit des Kraftverkehrs oder Einbau von Feinstaubpartikelfiltern in Kraftfahrzeugen werden verfolgt, haben bisher jedoch nicht die notwendige Reduzierung der Feinstaubbelastung bewirkt.

Es ist bekannt, dass eine geeignete Begrünung von Stadtzentren zur Reduzierung von Feinstaub, Stickoxiden und Kohlendioxid beitragen kann. Oftmals fehlt in den Stadtzentren allerdings geeigneter Platz für die Anpflanzung von Bäumen oder Sträuchern. Diesem Platzmangel kann durch die Anordnung von bepflanzten Wänden entgegengewirkt werden.

Verschiedene Ansätze für bepflanzte Wände sind bisher beschrieben worden. So offenbart die EP 2 382 859 A2 ein Pflanzenbehältersystem als Teil eines Bauwerks, wobei Pflanzbehälter für einen Aufbau einer Wand verwendet werden und mit einem Pflanzsubstrat zumindest teilweise befüllt sind. Allerdings hat sich gezeigt, dass die Feinstaubfilterwirkung von Blattpflanzen nicht effektiv genug ist, um die erforderlichen Grenzwerte einhalten zu können.

Moose hingegen weisen eine deutlich bessere Wirksamkeit bei der Bindung von Feinstaub aus. So können Moose Feinstaub aktiv binden und in ihren Stoffwechsel aufnehmen. Moose nehmen ihre Nahrung und Wasser ausschließlich über die Zellwände ihrer Blätter auf. Darüber hinaus haben Moose keine Wurzeln und benötigen deshalb keinen nährstoffhaltigen Untergrund zum Überleben und Wachsen. Sie ernähren sich ausschließlich über Nährstoffpartikel in der Luft.

Da Feinstaub hauptsächlich aus Stickstoffverbindungen besteht, kann dieser dem Moos ideal als Nährstoffquelle dienen. So besteht ungefähr die Hälfte der Feinstäube aus Ammoniumsalzen, die als Dünger von den Moosen aufgenommen und direkt in Pflanzenmasse umgewandelt werden. Entsprechend benötigen Moose keinen Dünger und bedürfen kaum einer Pflege.

Die Aufnahme der Nährstoffpartikel erfolgt mittels lonenaustausch. Die Moosblättchen sind negativ geladen und mit H⁺-Ionen besetzt. Die H+-Ionen werden gegen Ionen wie Ammonium ausgetauscht. Feuchte Moose können je nach Art, pro Quadratmeter 13 bis 22 Gramm Feinstaub binden. Insbesondere Laubmoose haben durch ihre dicht gestellten Blättchen eine extrem große Oberfläche: So bietet ein Kubikzentimeter Moos 0,17 m² Oberfläche, die den Feinstaub elektrostatisch festhalten und binden kann.

Weitere Vorteile der Moose bestehen in ihrer Fähigkeit aufgrund ihrer großen Oberflächen Wasser zu speichern und Lärm zu absorbieren.

Vorrichtungen, die die Feinstaubabsorption von Moosen ausnutzen, sind bereits bekannt. So wird in der DE 20 2007 012 9291 eine moosbegrünte Bauplatte für Außenwände beschrieben, wobei das Moos mittels eines Klebers auf den Bauplatten befestigt wird.

Aus der DE 10 2013 107 786 A1 ist eine vertikale Pflanzenwand bekannt, die an einer Wand montierbare vertikale Tragstrukturen für Pflanzentaschen und eine ganzflächige Vertikalabdeckung aus Moosmatten aufweist. Die in die Pflanzentaschen eingesetzten Pflanzen wachsen durch die davor angeordnete Moosmatte.

Die DE 20 2009 007 311 U1 beschreibt ein Lärmschutzelement, bei welchem auf der Lärmseite eine Moosmatte vorgesehen ist, die über eine Bewässerungseinrichtung bewässert wird. Die Bewässerungseinrichtung umfasst eine Wasserleitung mit einer Vielzahl von Austrittsöffnungen (zum Beispiel in Form eines porösen Schlauches), die oberhalb der Moosmatte verläuft. Das aus der Wasserleitung austropfende Wasser läuft die Moosmatte herunter und hält diese feucht. Nachteilig bei dieser Art der Bewässerung der Moosmatte ist eine ungleichmäßige Befeuchtung der Moosmatte, so dass die oben liegenden Moose zu wenig, die unten in der Matte wachsenden Moose zu viel Wasser erhalten und somit auf kurz oder lang absterben. Zudem muss das abtropfende Überschusswasser von der darunterliegenden Fläche aufgenommen oder abgeleitet werden.

Der Erfindung liegt daher die Aufgabe zugrunde, ein Begrünungssystem zur effektiven und langanhaltenden Reduzierung von Feinstaub und Stickoxiden in der Luft insbesondere im Innenstadtbereich bereitzustellen.

Diese Aufgabe der Erfindung wird durch ein Begrünungssystem mit den Merkmalen des Anspruchs 1 gelöst. Weitere vorteilhafte Ausführungen der Erfindung ergeben sich aus den abhängigen Ansprüchen.

Entsprechend wird ein Moos umfassendes Begrünungssystem bereitgestellt, welches auf einer (beliebigen) horizontalen Bodenfläche aufstellbar ist.

Das vorliegende Begrünungssystem umfasst
- mindestens ein statisch tragenden Element mit einer Vertikalen h;
- mindestens eine Trägerplatte, wobei die mindestens eine Trägerplatte dem mindestens einem statisch tragenden Element angeordnet ist;
- mindestens eine Moosmatte, wobei die mindestens eine Moosmatte auf der mindestens einen Trägerplatte angeordnet ist,
- wobei die mindestens Moosmatte mindestens ein Trägervlies mit darauf vorgesehenen vorkultivierten Moosen umfasst,
- wobei die mindestens eine mit der Moosmatte versehene Trägerplatte an dem mindestens einem statisch tragenden Element derart angeordnet ist, so dass der sich zwischen der Trägerplatte und der Vertikalen des statisch tragenden Elementes bildende Winkel β zwischen 3° und 40°, bevorzugt zwischen 5° und 40°, bevorzugter zwischen 10° und 30°, insbesondere bevorzugt zwischen 15° und 25° beträgt.

Das vorliegende Begrünungssystem umfasst somit ein mit Moos bedecktes mit einer Neigung bzw. Steigung versehenes Element, d.h. die Moosmatte verläuft nicht senkrecht oder vertikal zu einer Horizontalen, z.B. zu einer horizontalen Bodenfläche; d.h. nicht vertikal an einer senkrecht stehenden Wand angebracht, sondern vielmehr angeschrägt (d.h. ein Winkel β von 0° ist ausgenommen). Der Grad der Schräge bzw. Steigung ist derart ausgewählt, so dass das auf die Moosmatte auftreffende Wasser (ob mittels natürlicher Bewässerung (d.h. Regen) oder künstlicher Bewässerung nicht sofort von der Moosmatte abfliesst, sondern zumindest für einen bestimmten Zeitraum auf der Moosmatte verweilt. Dies stellt eine gleichmäßige, auf die Feuchteerfordernisse des Mooses abgestimmte Bewässerung sicher. Es hat sich nämlich gezeigt, dass für eine effektive Feinstaubaufnahme die Moose möglichst zu keinem Zeitpunkt ihres Lebenszyklus in einen Austrocknungszustand übergehen sollten. Auf der anderen Seite reagieren Moose auf einen Überschuss an Wasser (Staunässe) jedoch auch empfindlich. Der Feuchtehaushalt der Moose muss daher fein reguliert werden. Die vorliegende geneigte bzw. schräge Abordnung der Moosmatte ermöglicht nunmehr eine vollständige Befeuchtung der gesamten Oberfläche der Moosmatte über einen längeren Zeitraum, so dass das Moos zu jedem Zeitpunkt sich in seiner aktiven Stoffwechselphase befindet.

Aus dem sich zwischen der Trägerplatte und der Vertikalen des statisch tragenden Elementes gebildeten Winkel β zwischen 3° und 40°, bevorzugt zwischen 5° und 40°, bevorzugter zwischen 10° und 30°, insbesondere bevorzugt zwischen 15° und 25° ergibt sich gemäß der Gleichung γ = 90° = α + β, dass der die Trägerplatte auf eine Horizontale (z.B. eine horizontale Bodenfläche) mit einem Winkel α zwischen 50 und 87°, bevorzugt zwischen 50 und 85°, bevorzugter zwischen 60 und 80°, insbesondere bevorzugt zwischen 65 und 75° in Bezug auf die Horizontale auftrifft.

Die Winkelgröße bestimmt dabei den Abstand des unteren Endes bzw. der unteren Kante der mit Moos versehenen Trägerplatte vom statisch tragenden Element, wie z.B. einer Wand; d.h. je größer der Winkel β und je kleiner der Winkel α (bei gleicher Plattenbreite) desto größer ist der Abstand der unteren Trägerplattenkante von dem statisch tragenden Element und je größer ist der Raum zwischen Trägerplatte und statisch tragendem Element. Der Abstand kann je nach Anforderungen berechnet und eingestellt werden. Bei einer Trägerplattenbreite von 1000 mm und einem Winkel α von 80° liegt der Abstand zwischen dem statisch tragenden Element und der untern Plattenkante bei 174 mm, bei einem Winkel α von 83° bei 122 mm und bei einem, Winkel α von 85° bei 86 mm.

In einer Ausführungsform des Begrünungssystems ist vorgesehen, dass mindestens zwei mit jeweils einer Moosmatte versehene Trägerplatten so zueinander angeordnet sind, dass jeweils eine obere Trägerplatte eine darunter liegende Trägerplatte zumindest teilweise überdeckt. Insbesondere ist die Überdeckung so gewählt, dass das Wasser von einer oberen Trägerplatte auf die darunter liegenden Trägerplatte ablaufen (tropfen) kann. Eine derartige Anordnung ist auch als Stülpschalung bekannt. Die Breite der Trägerplatten kann beliebig ausgewählt sein, und z.B. zwischen 0,1m und 1m, bevorzugt zwischen 0,5 m und 0,8 m liegen. In einer Variante sind die angebrachten Trägerplatten so zueinander angeordnet, dass die jeweils obere Trägerplatte die darunter liegende Trägerplatte jeweils um z.B. 0,1 m überdeckt. Die Anordnung der mit Moosmatten versehenen Trägerplatten als Stülpschalung kann auf bzw. an jedem statisch tragenden Element, wie einer Wand, Pyramide etc. erfolgen. Unterhalb der Überdeckung (d.h. am Beginn der schrägen Platten) könnte auch einen Wasserschlauch und Wasserdüsen zur Bewässerung vorgesehen sein.

In einer weiteren Ausführungsform ist das vorliegende Begrünungssystem zum Aufstellen auf einer horizontalen Bodenfläche vorgesehen.

In einer Variante ist das mindestens eine statisch tragende Element in Form einer frei stehenden, bevorzugt vertikalen Wand ausgebildet, wobei sich die mindestens eine mit der Moosmatte versehene Trägerplatte von einem Punkt h1 der Vertikalen h des statisch tragenden Elementes in Richtung einer Horizontalen, insbesondere einer horizontalen Bodenfläche, derart erstreckt, so dass der sich zwischen der Trägerplatte und der Horizontalen bildende Winkel α zwischen 50° und 85°, bevorzugt zwischen 60° und 80°, insbesondere bevorzugt zwischen 65° und 75° beträgt. Der Punkt h1 kann ein beliebiger Abstand zur Bodenfläche sein. Die Winkelgröße α ist abhängig von den örtlichen Gegebenheiten und ist beliebig im beanspruchten Bereich einstellbar. So kann der Winkel α z.B. einen Wert von 51°, 56°, 60° oder 83° aufweisen.

Die Steigung bzw. Neigung der Trägerplatte kann auch als m = Δy / *Δ*x = y1-y2 / x1 - x2 beschrieben werden,
wobei y1 = h1 ist (mit h1 als dem Punkt der Vertikalen des statisch tragenden Elementes von welchem sich die Trägerplatte Richtung Bodenfläche erstreckt), und y2 = h0 ist (mit h0 als einem Endpunkt der Vertikalen des statisch tragenden Elementes, z.B. auf der auf der Bodenfläche), und
wobei x der Abstand bzw. die Länge in der Horizontalen zwischen dem Auftreffpunkt x1 der mit der Moosmatte versehenen Trägerplatte auf der Horizontalen (z.B. auf der horizontalen Bodenfläche) und dem Endpunkt x2=h0 der Vertikalen des statisch tragenden Elementes z.B. auf der Bodenfläche ist.

In der Ausführungsform umfassend eine frei stehende Wand als statisch tragendes Element kann die mit der Moosmatte versehene Trägerplatte z.B. an der oberen Kante der Wand beginnend mit einem Winkel α bzw. einer Neigung zwischen 50 und 85°, bevorzugt zwischen 60 und 80°, insbesondere bevorzugt zwischen 65 und 75° in Richtung der horizontalen Bodenfläche verlaufen. Entsprechend würde die Trägerplatte in diesem Fall mit einer Seite an der Oberkante der Wand und mit der gegenüberliegenden Seite auf der Bodenfläche befestigt sein. Es ist aber auch möglich, dass die Trägerplatte nicht direkt auf der Bodenfläche endet, sondern einen Abstand von der Bodenfläche aufweist. Dieser Abstand kann z.B. durch einen geeigneten Abstandshalter oder ähnliches vorgegeben sein. Es ist auch möglich, dass die mit Moos versehen Trägerplatten auf beiden Wandseiten angeordnet sind.

In Falle dieser ersten Ausführungsform ergibt sich zwischen der (vertikalen) Wand und den dazu schräg bzw. geneigt verlaufenden mit Moosmatten versehenen Trägerplatten jeweils ein Hohlraum.

Es ist auch vorstellbar, dass die mindestens eine Wand bereits selbst in Richtung Bodenfläche schräge bzw. geneigte Seitenwände aufweist. Insbesondere würden die Schrägen entlang der Längserstreckung der Wand verlaufen. In diesem Fall würden die Trägerplatten direkt auf einer oder beiden geneigten Seitenwänden angeordnet und befestigt werden; es würde somit kein Hohlraum gebildet werden.

In dieser Variante würde sich die Schräge bzw. Neigung der Seitenwände sich aus den Differenzen der Breiten der Wand ergeben. Mit anderen Worten, eine derartige Wand weist eine Höhe h mit einer ersten Breite b1 in der Höhe h und einer zweiten Breite b2 am Boden auf, wobei b1 kleiner ist als b2. Die Differenz von b1 und b2 (und die Höhe h) der Wand bestimmt den Grad der Steigung.

In einer zweiten bevorzugten Ausführungsform des vorliegenden Begrünungssystems ist das mindestens eine statisch tragende Element in Form einer Pyramide mit einer Grundfläche Gp mit n Ecken und einer Mantelfläche M_{P} aus n Seitenflächen aufgebaut, wobei n ≥ 3, bevorzugt 4, 5 oder 6 ist. Bevorzugt handelt es sich um eine vierseitige (quadratische), fünfseitige oder sechsseitige gerade Pyramide. Die Steigung bzw. Neigung der Seitenflächen der Pyramide wird durch die Höhe h_{P} der Pyramide bestimmt

In diesem Fall kann das statisch tragende Element aus n Trägern (z.B. Metallträgern oder ähnliches) bestehen, die sich an einem Ende in der Pyramidenspitze treffen und am anderen Ende die n Ecken der Grundfläche G_{P} der Pyramide bilden. Die Pyramidenspitze kann auch abgestumpft vorliegend und somit eine n-eckige Fläche aufweisen.

In einer spezifischen Ausführungsform weist das pyramidale Begrünungssystem für eine quadratische Grundfläche folgende Parameter auf. Die Seitenlänge a der quadratischen Grundfläche kann zwischen 2 - 5 m, bevorzugt zwischen 3 - 4 m betragen. Daraus ergibt sich eine Grundfläche G_{P} zwischen 4 - 25 m², bevorzugt zwischen 9 - 16 m²_{.} Die Höhe h_{P} der Pyramide kann zwischen 2 - 4 m, bevorzugt zwischen 2,5 und 3,5 m betragen. Die Länge der Seitenkante c kann bei 2-4 m, bevorzugt 2,5-3 m liegen. Aus diesen Werten ergibt sich eine Einzelmantelfläche von 4-7 m², bevorzugt 4,5-6,4 m² und eine Gesamtmantelfläche (bei 4 Einzelmantelflächen) von 16-28 m², bevorzugt von 18 - 25,6 m².

In einer Variante des Begrünungssystems in Pyramidenform ist die mit der Moosmatte versehene Trägerplatte auf mindestens einer Seitenfläche der Pyramide vorgesehen. Es ist aber auch möglich, dass mit Moosmatten versehene Trägerplatten auf mehreren oder sämtlichen Seitenflächen der Pyramide vorgesehen sind. Im m Falle einer quadratischen Pyramide könnten die mit Moosmatten versehenen Trägerplatten auf zwei oder drei, bevorzugt auf allen vier Seitenflächen der Pyramide vorgesehen sein.

In einer dritten bevorzugten Ausführungsform des vorliegenden Begrünungssystems ist das mindestens eine statische Element in Form eines Kegels (oder Konus) mit einer Grundfläche G_{K} mit einem Radius r, einer Höhe h_{K} und einer Mantelfläche M_{K} aufgebaut ist. Die Neigung bzw. Schräge der Mantelfläche wird durch die Höhe h_{K} des Kegels bestimmt. Die Kegelspitze kann auch abgestumpft vorliegend und somit eine kreisförmige Fläche aufweisen. Man könnte diese Ausführungsform auch als eine kegelförmige Säule beschreiben.

In einer weiteren Ausführungsform weist das vorliegende Begrünungssystem mindestens ein Bewässerungssystem auf, wobei das mindestens eine Bewässerungssystem eine gleichmäßige Befeuchtung der Oberfläche der mindestens einen Moosmatte bewirkt.

Das vorliegende Bewässerungssystem bewirkt eine ausschließliche Bewässerung bzw. Befeuchtung der Moosoberfläche; eine Bewässerung der Rückseite oder Unterseite der Moosmatte ist weder notwendig oder sinnvoll, da Moose keine Wurzeln aufweisen. Auch liegt es bevorzugt als automatisiertes System und ermöglicht eine bedarfsgerechte Bewässerung.

In einer Ausführungsform des vorliegenden Begrünungssystems umfasst das mindestens eine Bewässerungssystem eine Vielzahl von Öffnungen zur Wasserabgabe, insbesondere Düsen wobei die Düsen in oder auf der Moosmatte gleichmäßig beabstandet angeordnet sind.

In einer bevorzugten Variante besteht das Bewässerungssystem aus einem oder mehreren Bewässerungsrohren mit Nebeldüsen, wobei diese Nebeldüsen in einem regelmäßigen Abstand zueinander angeordnet sind, so dass eine Befeuchtung der gesamten Oberfläche der Moosmatte bewirkt wird.

Die Düsen können verklebt sein, um so ein einfaches Herausreißen der Düsen zu verhindern. Auch kann vorgesehen sein, die Düsen mit einem Sensor zu versehen bzw. zu verbinden, der einen Druckabfall im Bewässerungssystem registriert und z.B. eine entsprechende Mitteilung auf ein Mobilgerät wie z.B. ein Handy übersendet. Dieser Ansatz ermöglicht eine sinnvolle Fernwartung und Kontrolle des Bewässerungssystems.

Der Abstand der Düsen oder Austrittsöffnungen zueinander ist durch die Wurfweite (Reichweite bzw. Bewässerungskreis) der Düsen und Austrittsöffnungen bestimmt. Bevorzugterweise überlappen sich die Bewässerungskreise der Düsen oder Austrittsöffnungen, so dass alle Areale der Moosmatte gleichmäßig bewässert werden können. Im Durchschnitt ist eine Düse pro Quadratmeter vorgesehen.

Die für das Bewässerungssystem notwendigen Wasserzuleitungen bestehen bevorzugt aus Kunststoff, wie z.B. aus 16 mm Polyethylen-Rohren. Die Wasserzuleitungen werden hinter bzw. unterhalb der Moosmatte verlegt (d.h. zwischen Moosmatte und Trägerplatte). Die Wasserzuleitungen weisen an vorgegebenen Stellen einen Steg auf, auf dem später der Düsenkopf montiert wird. Nach Verlegung der Moosmatte wird ein T-Schnitt in die Moosmatte oberhalb des Steges angebracht. Anschließend wird ein Kreuzadapter auf den Steg aufgesetzt. Darauf sind vier Düsen aufgesteckt, welche die Moosmatten mit dem Wassernebel bestreichen. Die vorgegebenen Stellen werden zudem mit 0,5-1,0 cm starken Unterlegscheiben unterlegt, damit die Stege und somit die später angebrachten Düsenköpfe einen ausreichend großen Abstand zur Mooswand erhalten.

In einer weiteren Ausführungsform des vorliegenden Begrünungssystems ist am unteren Ende der Trägerplatte mindestens eine Vorrichtung zum Auffangen des über die Moosmatte ablaufenden Wassers (als Wasserleitprofil) vorgesehen. Diese Auffangvorrichtung für das ablaufende Wasser kann als Rinne oder Rinnenprofil vorgesehen sein.

Zur Bewässerung der Moose bzw. Moosmatten wird bevorzugt Regenwasser verwendet. Regenwasser kann z.B. von Dach- und Parkflächen gesammelt werden und dem Bewässerungssystem zugeführt werden (z.B. mittels einer Pumpe). Das zur Bewässerung verwendete Wasser darf einen Härtegrad von maximal 7 Grad deutscher Härte aufweisen. Bei höheren Härtegraden kann das Wasser auch mit einer Teilentsalzungsanlage vorab aufbereitet werden.

Die zur Bewässerung verwendete Wassermenge ergibt sich aus der Anzahl der Düsen, der Bewässerungsdauer und des erzeugten Druckes. So verbraucht eine Düse etwa 6 Liter pro Stunde bei einem Druck von 3 bar.

In einer weiteren Ausführungsform des vorliegenden Begrünungssystems besteht die mindestens eine Moosmatte aus mindestens zwei Lagen, bevorzugt einem Vlies und einem Filamentgewebe. Die Moospflanzen sind zwischen der Vliesoberfläche und dem Filamentgewebe verwachsen. Insbesondere besteht die Moosmatte aus einem Trägervlies mit darauf jung aufwachsenden Moosen (vorkultiviert), die sich zwischen dem Vlies und dem Strukturgewebe festhalten und so mit der Vliesoberfläche verwachsen können.

In einer Variante umfasst eine erste Lage ein Wasserspeichervlies, insbesondere aus Polyacrylaten oder Polyethylen. Derartige Vliese weisen ein Flächengewicht von 500 - 1000 g/m², bevorzugt von 600 bis 800 g/m² auf.

Auf diese erste Lage ist mindestens eine weitere, zweite Lage in Form eines Filamentgewebes angeordnet. Das Filamentgewebe besteht z.B. aus Polyamidfäden, die auf das Wasserspeichervlies aufgenäht sind.

Die Materialdicke des Vlieses liegt in einem Bereich zwischen 10 und 50 mm, bevorzugt 15 und 30 mm.

Die mindestens eine vorkultivierte Moosmatte wird auf der mindestens einen Trägerplatte mittels geeigneter Befestigungslemente angebracht. Hierfür geeignete Befestigungsmittel sind z.B. Edelstahl-Tackernadeln oder Edelstahl-Spenglerschrauben.

In einer besonders bevorzugten Ausführungsform des vorliegenden Begrünungssystems umfasst die Moosmatte Moose ausgewählt aus der Gruppe enthaltend *Rhacomitrium canescens, Ceratodon purpureus, Bryum argenteum, Bryum capillare, Brachythecium rutabulum, Hypnum filliformis, Polytrichum commune, Polytrichum formosum, Polytrichum juniperinum, Tortula ruralis, Tortula muralis, Leucodon sciuroides.*

Die vorliegend bevorzugt verwendeten Moose sind durch eine besonders gute Trockenresistenz, Stadtklimaresistenz, z.T. sonnige Lagen vertragend (wobei schattige Lagen immer vorzuziehen sind) gekennzeichnet.

In einer weiteren Ausführungsform des vorliegenden Begrünungssystems ist die mindestens eine Trägerplatte als Aluminium-Verbundplatte, Kunststoffplatte / Kunststoffelement oder eine Dämmplatte ausgelegt.

Die Dicke der Trägerplatte variiert in Abhängigkeit von dem verwendeten Material. So kann im Falle einer Aluminium-Verbundplatte als Trägerplatte die Dicke der Trägerplatte zwischen 3 - 8 mm , bevorzugt 4 - 5 mm liegen, während im Falle einer Kunststoffplatte oder einer Dämmplatte die Dicke zwischen 4- 10 cm liegen kann. Die Trägerplatte dient gleichzeitig auch zur Schallabsorption.

Die als Trägerplatte verwendbaren Dämmplatten bestehen bevorzugt aus einem Dämmkern, z.B. aus einer nicht-verrottbaren Mineralfaser, und einer Deckschicht, z.B. aus einer Kunststoff- oder Metallbeschichtung. Die Deckschicht ist mit Poren versehen durch welche Luft in den Dämmkern eindringen kann. Dadurch können Schadstoffe zusätzlich im Dämmkern absorbiert werden und aus diesem, wenn nötig mittels einem geeigneten Gebläse abgezogen werden.

Die Trägerplatte kann, falls notwendig, auf einem zusätzlichen Tragprofil angebracht sein, welches weiter unten noch detaillierter beschrieben wird. Die Trägerplatte ist auf dem Tragprofil mittels geeigneter Befestigungselemente befestigt. So können die Trägerplatten mithilfe von Nieten oder Schrauben (Edelstahl) auf den Tragprofilen befestigt werden.

In einer weiteren bevorzugten Ausführungsform umfasst das vorliegende Begrünungssystem mindestens ein Wasserreservoir und mindestens eine Wasserpumpe zur Zuführung von Wasser aus dem mindestens einen Wasserreservoir in das mindestens eine Bewässerungssystem.

Das mindestens eine Wasserreservoir z.B. Form einer von einer oder mehreren Plastikwannen und die mindestens eine Wasserpumpe können dabei in mindestens einem durch das statisch tragende Element gebildeten Hohlraum vorgesehen sein. So ist es z.B. vorstellbar, dass Wasserreservoir und Wasserpumpe in dem zwischen Wand und Trägerplatte gebildeten Hohlraum oder im Innenraum bzw. Hohlraum der Pyramide oder des Kegels vorgesehen sind.

In solch einem Fall ist es zweckmäßig, einen geeigneten Zutritt in den Innenraum vorzusehen, um Wasserreservoir und Wasserpumpe einer regelmäßigen Wartung unterziehen zu können. Auch ist so ein Auffüllen des Wasserreservoirs möglich. Dieser Zutritt kann z.B. in Form einer Revisionsöffnung bzw. Revisionstür ausgebildet sein, die in eine der Trägerplatten eingelassen ist.

Es ist aber auch möglich, dass Wasserreservoir und Wasserpumpe räumlich getrennt vom Bewässerungssystem, d.h. nicht im Innenraum sondern außerhalb der Struktur, angeordnet sein können, wobei das Wasser über geeignete Wasserleitungen in das Bewässerungssystem des vorliegenden Begrünungssystems transportiert bzw. eingeführt wird.

In einer weiteren Ausführungsform umfasst das vorliegende Begrünungssystem mindestens ein Solarmodul zur Bereitstellung von elektrischer Energie, insbesondere zum Antrieb der mindestens einen Wasserpumpe. Das vorliegende Begrünungssystem stellt somit ein autark arbeitendes System dar, welches unabhängig von der Energieversorgung an jeder geeigneten Stelle z.B. auf großen Plätzen oder entlang von Straßen aufgestellt werden kann.

Das mindestens eine Solarmodul ist bevorzugt am Begrünungssystem angebracht, z.B. auf einer abgestumpften Spitze der Pyramide oder des Kegels. Es ist aber auch möglich und denkbar, dass das mindestens eine Solarmodul auf oder an der Oberkante / Oberseite der Wand angeordnet ist.

Es ist auch möglich, das vorliegende Begrünungssystem mit einer geeigneten Beleuchtung zu versehen. So können z.B. LED Leuchten an geeigneten Stellen am Begrünungssystem angebracht werden. Die Beleuchtung wird durch das Solarmodul mit elektrischem Strom versorgt.

Wie oben erwähnt, kann die Trägerplatte auf einem Tragprofil befestigt werden. Diese Tragprofile können z.B. von einander beabstandete Trägerelementen gebildet werden. Es können auch T- oder L-Profile vorgesehen sein. Die Tragprofile verlaufen bevorzugt vertikal und mit einem vorbestimmten Abstand parallel zueinander, wobei der Abstand der Tragprofile zueinander durch die statische Berechnung vorgegeben ist.

Trägerplatte bzw. Tragprofil werden mittels geeigneter Verankerungselemente an dem tragenden Element wie z.B. im Falle der Pyramide an den die Pyramide bildenden Trägerelementen befestigt. Diese Verankerungselemente können z.B. geeignete Bohrspitzeschrauben sein.

Die vorliegende Erfindung wird anhand mehrerer in der Figuren dargestellter Ausführungsbeispiele näher erläutert. Im Einzelnen zeigen die Figuren:
- Figur 1A: eine schematische Ansicht einer ersten Ausführungsform des erfindungsgemäßen Begrünungssystems;
- Figur 1B: eine schematische Ansicht einer zweiten Ausführungsform des erfindungsgemäßen Begrünungssystems;
- Figur 1C: eine schematische Ansicht einer dritten Ausführungsform des erfindungsgemäßen Begrünungssystems;
- Figur 1D: eine schematische Ansicht einer vierten Ausführungsform des erfindungsgemäßen Begrünungssystems;
- Figur 2: eine schematische Ansicht einer fünften Ausführungsform des erfindungsgemäßen Begrünungssystems;
- Figur 3: eine schematische Ansicht einer sechsten Ausführungsform des erfindungsgemäßen Begrünungssystems;
- Figur 4: ein Diagramm mit der Darstellung der Feinstaubminderung durch verschiedene Moosarten.

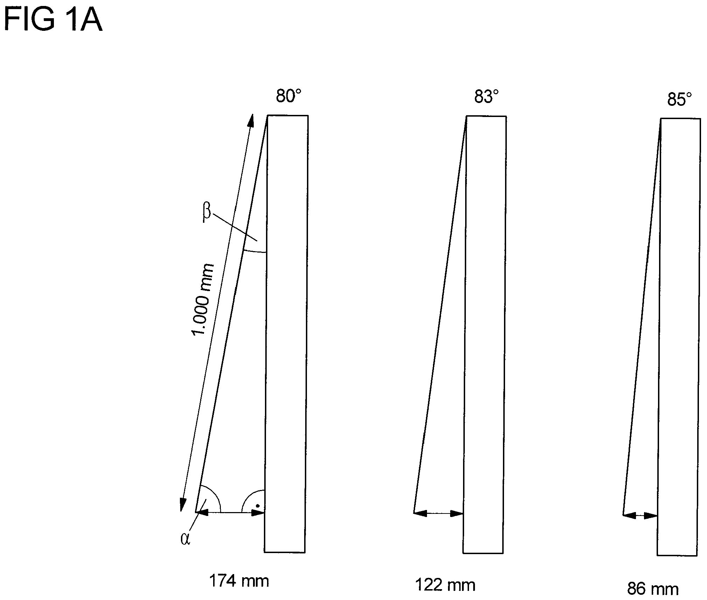

Figur 1A zeigt eine schematische Seitenansicht von Ausführungsformen mit verschiedenen Neigungswinkeln der mit einer Moosmatte versehenen Trägerplatten, wobei die Trägerplatten auf die Bodenfläche als Horizontale ausgerichtet sind.

Die Winkelgröße bestimmt dabei den Abstand des unteren Endes bzw. der unteren Kante der mit Moos versehenen Trägerplatte vom statisch tragenden Element, wie z.B. einer Wand; d.h. je größer der Winkel β und je kleiner der Winkel α (bei gleicher Plattenbreite) desto größer ist der Abstand der unteren Trägerplattenkante von dem statisch tragenden Element und je größer ist der Raum zwischen Trägerplatte und statisch tragendem Element. Der Abstand kann je nach Anforderungen berechnet und eingestellt werden. Bei einer Trägerplattenbreite von 1000 mm und einem Winkel α von 80° liegt der Abstand zwischen dem statisch tragenden Element und der untern Plattenkante bei 174 mm, bei einem Winkel α von 83° bei 122 mm und bei einem, Winkel α von 85° bei 86 mm.

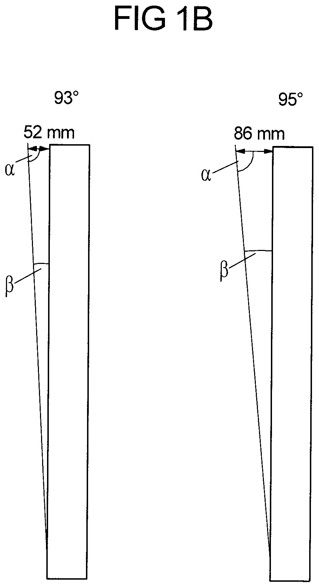

Figur 1B zeigt eine schematische Seitenansicht von Ausführungsformen mit verschiedenen Neigungswinkeln der mit einer Moosmatte versehenen Trägerplatten, wobei im Unterschied zu den Ausführungsformen der Figur 1A die Trägerplatten nicht auf die Bodenfläche als Horizontale ausgerichtet sind, sondern vielmehr umgekehrt verlaufen: d.h. die Trägerplatten weisen den größten Abstand vom statisch tragenden Element an der oberen Trägerplattenkante auf. Auch hier gilt, je größer der Winkel β desto größer der Abstand von der oberen Trägerplattenkante vom statisch tragenden Element.

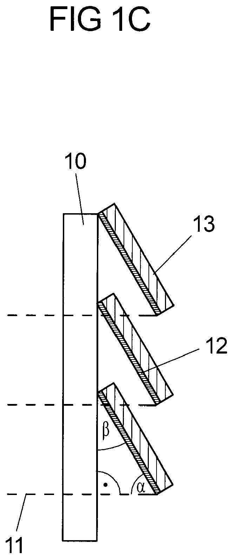

In Figur 1C ist eine seitliche Querschnittsansicht einer dritten Ausführungsform des vorliegenden Begrünungssystems B mit einer Stülpschalung dargestellt.

In dieser dritten Ausführungsform kann das statisch tragende Element eine frei stehende Wand 10 sein. An der vertikalen Wand 10 sind drei Trägerplatten 12 angeordnet, auf denen jeweils Moosmatten 13 mit Tackernadeln oder Spenglerschrauben befestigt sind. Die Trägerplatten 12. Breite und Länge der Trägerplatten 12 sind in dieser Ausführungsform beliebig auswählbar.

Jede der Trägerplatten 12 ist an der Wand 10 in einem Winkel β von 7° angeordnet; der zwischen der Trägerlatte 12 und der Horizontalen 11 Winkel α beträgt entsprechend 83°.

Die mit jeweils einer Moosmatte versehene Trägerplatten sind dabei so zueinander angeordnet sind, dass jeweils eine obere Trägerplatte eine darunter liegende Trägerplatte zumindest teilweise überdeckt. Insbesondere ist die Überdeckung so gewählt, dass das Wasser von einer oberen Trägerplatte auf die darunter liegenden Trägerplatte ablaufen (tropfen) kann. In einer Variante sind die Trägerplatten so zueinander angeordnet, dass die jeweils obere Trägerplatte die darunter liegende Trägerplatte jeweils um 2,5 bis 3,5 cm überdeckt.

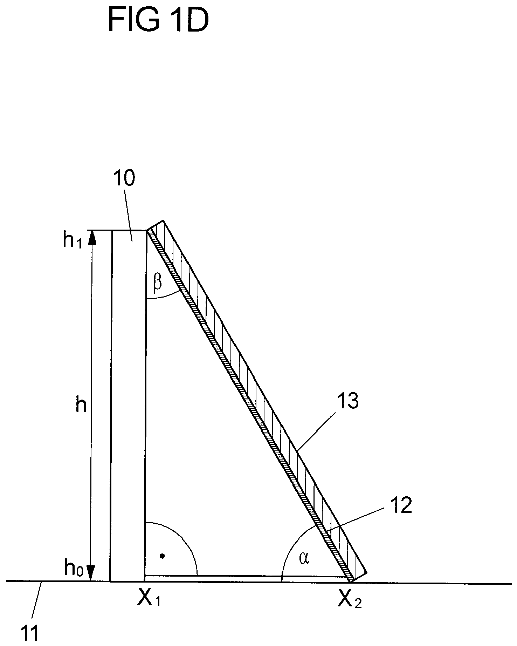

Figur 1D zeigt eine seitliche Querschnittsansicht einer vierten Ausführungsform des vorliegenden Begrünungssystems B.

In dieser vierten Ausführungsform des vorliegenden Begrünungssystems besteht das eine statisch tragende Element ebenfalls aus einer frei stehenden vertikalen Wand 10 mit einer Gesamthöhe h, die mit ihrem unteren Ende h₀ auf einer horizontalen Bodenfläche 11 steht bzw. in geeigneter Weise mit der Bodenfläche 11 verankert ist.

An der vertikalen Wand 10 ist an einem Punkt h1 eine Trägerplatte 12 angeordnet, auf welcher wiederum die Moosmatte 13 mittels Tackernadeln oder Spenglerschrauben befestigt ist.

Die mit der Moosmatte versehene Trägerplatte 12 verläuft mit einer Neigung in Richtung Bodenfläche 11 und trifft mit dem unteren Ende am Kontaktpunkt x₂ in einem Winkel α von 70-75° auf die Bodenfläche 11. Der Abstand x zwischen unteren Ende der Trägerplatte und Seitenwand ergibt sich aus der Differenz zwischen Kontaktpunkt x₂ der Trägerplatte auf der Bodenfläche und Kontaktpunkt h₀ (=x₁) der Wand auf der Bodenfläche. Die Neigung m der Trägerplatte kann entsprechend gemäß m = h₁-h₀ / x₂-x₁ bestimmt werden.

In Falle dieser vierten Ausführungsform ergibt sich zwischen der (vertikalen) Wand und den dazu schräg bzw. geneigt verlaufenden mit Moosmatten versehenen Trägerplatten jeweils ein Hohlraum.

Die Moosmatte 13 besteht aus einem Wasserspeichervlies aus Polyacrylaten oder Polyethylen mit einem Flächengewicht von 800 g/m², über das ein Filamentgelege (Schlingengewebe) aus Polyamidfäden genäht ist. Beide Materialien sind UV stabilisiert. Das Vorvlies weist ein geringes Gewicht und eine normale Entflammbarkeit auf. Die Materialdicke des Vlieses beträgt ca. 15 mm.

Auf der Oberfläche des Vlieses werden die Moospflanzen verankert, um so die vorkultivierte Moosmatte zu erhalten. Im gewachsenen Zustand wird aufgrund der hohen Wasserspeicherfähigkeit der Moose ein Flächengewicht der Moosmatte von über 2 kg/m² erhalten. Im voll bewachsenen und wassergesättigten Zustand kann die Matte bis zu 20 kg/m² wiegen.

Die Befeuchtung der Moose der Moosmatte 13 wird durch ein geeignetes Bewässerungssystem (in Figur 1B nicht gezeigt) gewährleistet. Das Bewässerungssystem besteht aus mehreren Bewässerungsrohren, an denen in regelmäßigen Abständen Düsen zur Wasserabgabe angeordnet sind. Aufgrund der regelmäßigen Anordnung der Düsen wird eine gleichmäßige Befeuchtung der gesamten Oberfläche der Moosmatte gewährleistet.

Der Abstand der Düsen oder Austrittsöffnungen zueinander ist durch den Bewässerungskreis der Düsen bestimmt. Im Durchschnitt ist eine Düse pro Quadratmeter vorgesehen.

Die für das Bewässerungssystem notwendigen Wasserzuleitungen bestehen aus 16 mm Polyethylen-Rohren. Die Wasserzuleitungen werden hinter bzw. unterhalb der Moosmatte verlegt (d.h. zwischen Moosmatte und Trägerplatte). Die Wasserzuleitungen weisen an vorgegebenen Stellen einen Steg auf, auf dem später der Düsenkopf montiert wird. Nach Verlegung der Moosmatte wird ein T-Schnitt in die Moosmatte oberhalb des Steges angebracht. Anschließend wird ein Kreuzadapter auf den Steg aufgesetzt. Darauf sind Düsen aufgesteckt, welche die Moosmatten wandparallel mit dem Wassernebel bestreichen.

Am unteren Ende der Trägerplatte 12 ist ein Rinnenprofil (nicht gezeigt) als Auffangvorrichtung für das über die Moosmatte 12 ablaufende Wasser vorgesehen. Das ablaufende Wasser kann zum Beispiel unter Verwendung einer geeigneten Pumpe in das Bewässerungssystem zurückgeführt werden und wieder verwendet werden.

Zur Bewässerung wird bevorzugt Regenwasser verwendet, welches zum Beispiel von Dach- und Parkflächen gesammelt werden kann und in das Bewässerungssystem 5 eingeführt wird.

Da Moose nicht über Wurzeln verfügen, nehmen sie ihre Nahrung direkt über die Zellwände der Blätter mittels lonenaustausch auf. Laubmoose haben durch ihre dicht gestellten Plättchen eine extrem große Oberfläche, die den Feinstaub binden kann. Das im Feinstaub bis zu 50 % enthaltene an Ammoniumnitrat wird von den Moosen direkt aufgenommen, verstoffwechselt und somit in Pflanzenmasse umgewandelt.

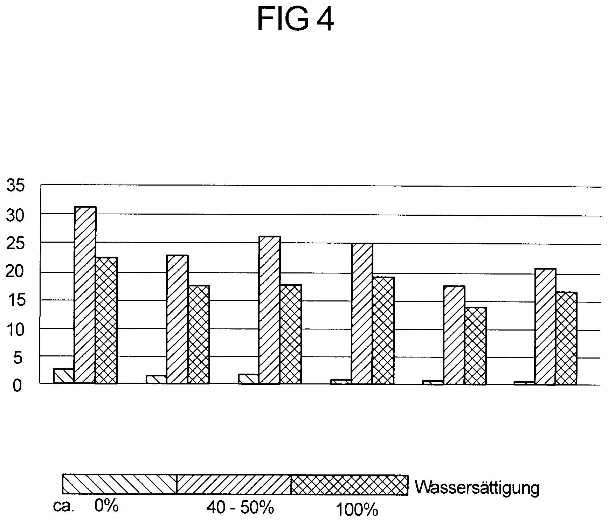

Die Fähigkeit von verschiedenen Moosarten zur Feinstaubbindung ist im Diagramm der Figur 4 dargestellt. Hier wird die Aufnahmefähigkeit von Pb²⁺-Ionen von unterschiedlichen Moosarten bei unterschiedlicher Wassersättigung verglichen. Dabei zeigt sich, dass die Fähigkeit zur Feinstaubbindung in großem Maße von der Wassersättigung der Moose abhängig ist.

So ist wenig überraschend, dass die Feinstaubbindung bei einer Wassersättigung von ca. 0 % (d.h. ausgetrocknete Zustand der Moose) nur sehr gering ausgebildet ist, wohingegen bei einer Wassersättigung zwischen 40-50 % eine Bindung von Pb²⁺ zwischen 20 und 30 % erreicht wird. Eine Wassersättigung von 100 % reduziert die Pb²⁺- Bindung auf 15 bis 20 %. Eine optimal eingestellte Wassersättigung der Moose ist daher notwendig und wünschenswert für eine möglichst effiziente Feinstaubbindung.

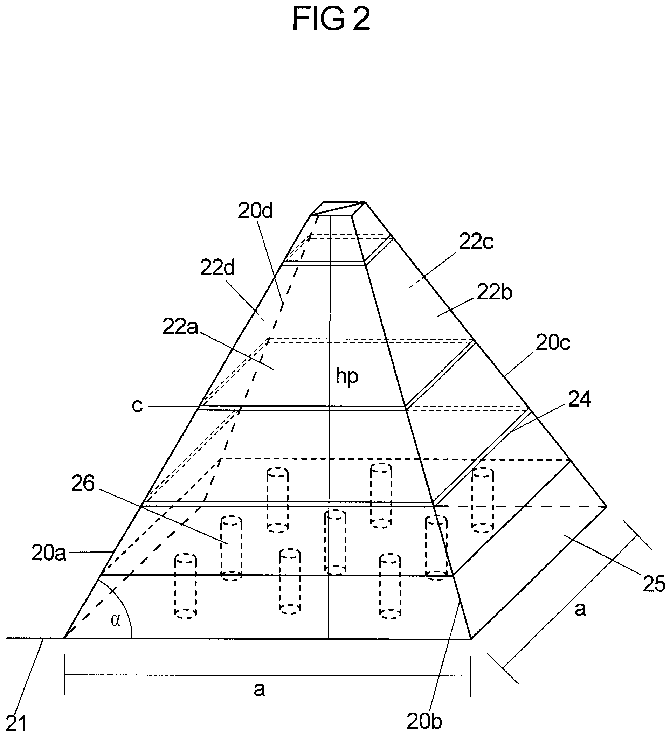

Figur 2 zeigt eine schematische Ansicht einer fünften Ausführungsform des vorliegenden Begrünungssystems B.

In dieser fünften Ausführungsform ist das vorliegende Begrünungssystem in Form einer quadratischen Pyramide aufgebaut. Das statisch tragende Element besteht hier aus 4 Trägern 20a-d, die jeweils mit einem (unteren) Ende auf der Bodenfläche 21 verankert sind und die 4 Ecken der quadratischen Grundfläche G_{P} (mit einer Seitenlänge a) bilden, und mit ihrem anderen (oberen) Ende in einer Pyramidenspitze (hier mit der abgestumpften Fläche Gₛₚ) zusammenlaufen.

Die Seitenlänge a der quadratischen Grundfläche beträgt in der in Figur 2 gezeigten Variante 3 m, die Grundfläche G_{P} 9 m², die Höhe hp 3m, eine Teilmantelfläche 4,5 m² und die Gesamtmantelfläche 10 m². Der Steigungswinkel α liegt bei 60°.

Alle vier Seitenflächen der Pyramide sind mit jeweils einer Trägerplatte 22a-d versehen, wobei die Trägerplatten 22a-d an den vier Trägern 20a-d mit geeigneten Befestigungsmitteln verankert sind. Auf den Trägerplatten 22a-d sind jeweils wiederum die Moosmatten 23a-d befestigt.

Die Wasserzuleitungen 24 für das Bewässerungssystem sind Polyethylenrohre, die hinter bzw. unterhalb der Moosmatte verlegt (d.h. zwischen Moosmatte und Trägerplatte) werden. Die Wasserzuleitungen weisen an vorgegebenen Stellen einen Steg auf, auf dem später der Düsenkopf montiert wird. Nach Verlegung der Moosmatte wird ein T-Schnitt in die Moosmatte oberhalb des Steges angebracht. Anschließend wird ein Kreuzadapter auf den Steg aufgesetzt. Darauf sind Düsen aufgesteckt, welche die Moosmatten wandparallel mit dem Wassernebel bestreichen.

Die Wasserzuleitungen 24 verlaufen parallel zur Bodenfläche 21 und weisen einen regelmäßigen Abstand zueinander auf.

Die Wasserzufuhr für die Wasserzuleitungen 24 erfolgt aus einem Wasserreservoir 25 unter Verwendung von einer oder mehreren Wasserpumpen 26. Wasserreservoir 25 und Wasserpumpen 26 sind im Innenraum der Pyramide angeordnet, und zwar im unteren Bereich des Pyramideninnenraums.

Auf der abgestumpften Kegelspitze ist ein Solarmodul vorgesehen, welches den für die Wasserpumpen erforderlichen Strom bereitstellt. Der Zutritt bzw. Zugriff in den Innenraum erfolgt mittels einer in eine der Trägerplatten eingelassenen Revisionstür (nicht gezeigt).

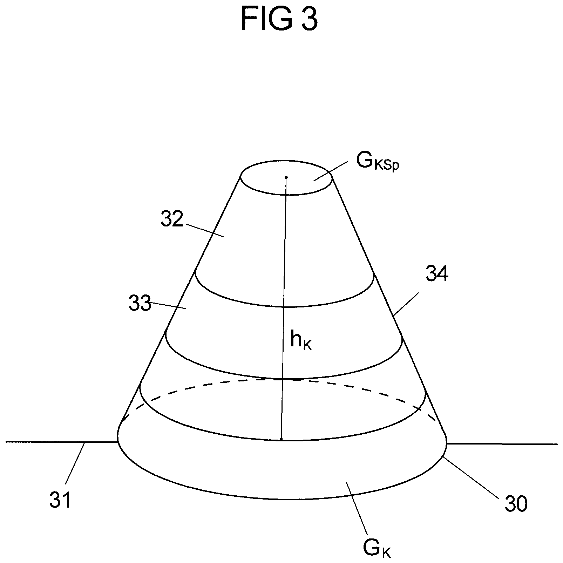

Figur 3 zeigt eine schematische Ansicht einer sechsten Ausführungsform des vorliegenden Begrünungssystems B.

In dieser sechsten Ausführungsform ist das vorliegende Begrünungssystem in Form einer kegelförmigen Säule aufgebaut. Das statisch tragende Element besteht hier aus einem kreisförmigen Trägerelement 30 mit einer Grundfläche G_{K} mit einem Radius r, einer Höhe h_{K} und einer Mantelfläche M_{K}. Die Neigung bzw. Schräge der Mantelfläche wird durch die Höhe h_{K} des Kegels bestimmt. Die Kegelspitze liegt abgestumpft vor und bildet eine kreisförmige Fläche G_{KSp} aus.

Die Trägerplatten 32 bestehen hier aus einem flexibleren Material, um eine einfache Anpassung an die Kegelform zu ermöglichen. Auf den Trägerplatten 32 sind wiederum die Moosmatten 33 angeordnet.

Ebenfalls ist ein Bewässerungssystem, Solarmodul und ein Wasserreservoir nebst Wasserpumpen im Innenraum der Säule vorgesehen (nicht gezeigt). Der Zugriff in den Innenraum erfolgt wiederum über eine in der Außenseite der Säule vorgesehen Tür (nicht gezeigt).

## Patentansprüche

1. Ein Moos umfassendes Begrünungssystem
umfassend
- mindestens ein statisch tragenden Element (10, 20, 30) mit einer Vertikalen (h, h_{P}, h_{K});
- mindestens eine Trägerplatte (12, 22, 32), wobei die mindestens eine Trägerplatte (12, 22, 32) an dem mindestens einem statisch tragenden Element (10, 20, 30) angeordnet ist;
- mindestens eine Moosmatte (13, 23, 33), wobei die mindestens eine Moosmatte (13, 23, 33) auf der mindestens einen Trägerplatte (12, 22, 32) angeordnet ist,
- wobei die mindestens Moosmatte (13, 23, 33) mindestens ein Trägervlies mit darauf vorgesehenen vorkultivierten Moosen umfasst;
**dadurch gekennzeichnet, dass**
die mindestens eine mit der Moosmatte (13, 23, 33) versehene Trägerplatte (12, 22, 32) an dem mindestens einem statisch tragenden Element (10, 20, 30) derart angeordnet ist, so dass der sich zwischen der Trägerplatte und der Vertikalen des statisch tragenden Elementes bildende Winkel β zwischen 5° und 40°, bevorzugt zwischen 10° und 30°, insbesondere bevorzugt zwischen 15° und 25° beträgt.

2. Begrünungssystem nach Anspruch 1, **dadurch gekennzeichnet, dass** mindestens zwei mit jeweils einer Moosmatte versehene Trägerplatten so zueinander angeordnet sind, dass jeweils eine obere Trägerplatte eine darunter liegende Trägerplatte zumindest teilweise überdeckt.

3. Begrünungssystem nach Anspruch 1 oder 2, **dadurch gekennzeichnet, dass** das mindestens eine statisch tragende Element eine frei stehende, bevorzugt vertikale Wand umfasst, wobei sich die mindestens eine mit der Moosmatte versehene Trägerplatte von einem Punkt h1 der Vertikalen h des statisch tragenden Elementes in Richtung einer Horizontalen, insbesondere einer horizontalen Bodenfläche, derart erstreckt, so dass der sich zwischen der Trägerplatte und der Horizontalen bildende Winkel α zwischen 50° und 85°, bevorzugt zwischen 60° und 80°, insbesondere bevorzugt zwischen 65° und 75° beträgt.

4. Begrünungssystem nach Anspruch 1 oder 2, **dadurch gekennzeichnet, dass** das mindestens eine statisch tragende Element in Form einer Pyramide mit einer Grundfläche G_{P} mit n Ecken, einer Höhe h_{P} und einer Mantelfläche M_{P} aus n Seitenflächen aufgebaut ist, wobei n ≥ 3, bevorzugt 4, 5 oder 6 ist.

5. Begrünungssystem nach Anspruch 4, **dadurch gekennzeichnet, dass** die Trägerplatte mit der Moosmatte auf mindestens einer Seitenfläche der Pyramide vorgesehen ist.

6. Begrünungssystem nach Anspruch 1 oder 2, **dadurch gekennzeichnet, dass** das mindestens eine statische Element in Form eines Kegels (oder Konus) mit einer Grundfläche G_{K} mit einem Radius r, einer Höhe h_{K} und einer Mantelfläche M_{K} aufgebaut ist.

7. Begrünungssystem nach einem der vorhergehenden Ansprüche, **gekennzeichnet durch** mindestens ein Bewässerungssystem, wobei das mindestens eine Bewässerungssystem eine gleichmäßige Befeuchtung der Oberfläche der mindestens einen Moosmatte bewirkt.

8. Begrünungssystem nach Anspruch 7, **dadurch gekennzeichnet, dass** das mindestens eine Bewässerungssystem Düsen oder Öffnungen zur Wasserabgabe umfasst, wobei die Düsen oder Öffnungen zur Wasserabgabe in oder auf der Moosmatte gleichmäßig beabstandet angeordnet sind.

9. Begrünungssystem nach einem der Ansprüche 7 bis 8, **dadurch gekennzeichnet, dass** das mindestens eine Bewässerungssystem ein Bewässerungsrohr mit Nebeldüsen umfasst.

10. Begrünungssystem nach einem der vorhergehenden Ansprüche, **dadurch gekennzeichnet, dass** die mindestens eine Trägerplatte eine Aluminium-Verbundplatte, ein Kunststoffplatte / Kunststoffelement oder eine Dämmplatte ist.

11. Begrünungssystem nach einem der vorhergehenden Ansprüche, **dadurch gekennzeichnet, dass** mindestens ein Wasserreservoir und mindestens eine Wasserpumpe zur Zuführung von Wasser in das mindestens eine Bewässerungssystem vorgesehen ist.

12. Begrünungssystem nach Anspruch 11, **dadurch gekennzeichnet, dass** das mindestens ein Wasserreservoir und die mindestens eine Wasserpumpe zur Zuführung von Wasser in das mindestens eine Bewässerungssystem in mindestens einem durch das statisch tragende Element gebildeten Hohlraum vorgesehen ist.

13. Begrünungssystem nach einem der vorhergehenden Ansprüche, **dadurch gekennzeichnet** durch mindestens ein Solarmodul zur Bereitstellung von elektrischer Energie.

14. Begrünungssystem nach einem der vorhergehenden Ansprüche, **dadurch gekennzeichnet, dass** die mindestens eine Moosmatte aus mindestens zwei Lagen besteht.

15. Begrünungssystem nach einem der vorhergehenden Ansprüche, **dadurch gekennzeichnet, dass** die Moosmatte (4) Moose ausgewählt aus der Gruppe enthaltend *Rhacomitrium canescens, Ceratodon purpureus, Bryum argenteum, Bryum capillare, Brachythecium rutabulum, Hypnum filliformis, Polytrichum commune, Polytrichum formosum, Polytrichum juniperinum, Tortula ruralis, Tortula muralis, Leucodon sciuroides* umfasst.
